# EUROPÄISCHE PATENTSCHRIFT

(11) **EP 3 969 863 B1**
(45) Veröffentlichungstag und Bekanntmachung des Hinweises auf die Patenterteilung: **30.04.2025**
(21) Anmeldenummer: 20726085.2
(22) Anmeldetag: 14.05.2020
(51) Int. Cl.: G01K 7/18, H01C 1/028, H01C 1/012, H01C 3/12, H01C 7/00, H01C 17/065, G01K 1/08

(54) **VERBESSERTER HOCHTEMPERATURCHIP**
IMPROVED HIGH-TEMPERATURE CHIP
PUCE AMÉLIORÉE DE MESURE DE TEMPÉRATURES ÉLEVÉES

(30) Priorität: 17.05.2019 DE 202019002164 U
(43) Veröffentlichungstag der Anmeldung: 23.03.2022
(73) Patentinhaber: Yageo Nexensos GmbH, 63801 Kleinostheim (DE)
(72) Erfinder: ZINKEVICH, Matsvei, 63801 Kleinostheim (DE); ASMUS, Tim, 63801 Kleinostheim (DE); DIETMANN, Stefan, 63801 Kleinostheim (DE)
(74) Vertreter: Meissner Bolte Partnerschaft mbB
(86) Internationale Anmeldenummer: PCT/EP2020/063419
(87) Internationale Veröffentlichungsnummer: WO 2020/234097

(56) Entgegenhaltungen:
- WO-A1-00/42402
- DE-A1- 102012 110 210
- DE-B4- 102012 110 210

## Beschreibung

Die vorliegende Erfindung betrifft einen Temperatursensor, insbesondere Hochtemperatursensor aufweisend ein Substrat, zumindest eine Widerstandsstruktur und zumindest zwei Anschlusskontakte, wobei die Anschlusskontakte die Widerstandsstruktur elektrisch kontaktieren.

Derartige Temperatursensoren werden in der Automobilbranche zur Messung der Abgastemperatur und/oder Verbrennungstemperatur von Motorgasen verwendet. Die Messung soll häufig möglichst dicht am Motor erfolgen. Daher müssen solche Sensoren die hohen Temperaturen der Verbrennungsgase aushalten. Temperatursensoren mit einer ebenen Widerstandsstruktur sind beispielsweise aus der DE 197 42 696 A1 bekannt.

Es wurden im Stand der Technik einige Vorschläge gemacht, wie solche hochtemperaturstabilen Temperatursensoren aufgebaut werden können. So wurde mit der DE 10 2007 046 900 B4 ein Sensor mit einem selbstragenden Deckel als Schutz für eine Platin- Widerstandsstruktur vorgeschlagen. Aus der DE 10 2009 007 940 B4 ist ein weiterer Hochtemperatursensor bekannt, bei dem das Substrat Zirkoniumoxid enthält. Um einer Vergiftung mit Ionen vorzubeugen, die für die Platin-Schichtwiderstandsstruktur schädlich sind, wird mit der DE 10 2011 051 845 B4 vorgeschlagen, zusätzlich Opferelektroden auf das Substrat aufzutragen.

Ein Temperatursensor, der auch bei häufigen Temperaturwechseln funktionieren soll ist aus der DE 10 2012 110 210 B4 bekannt. Allerdings beginnt der beschriebene Temperartursensor bei hohen Temperaturen, nach längerer Exposition in korrosiven Gasen, insbesondere im Abgasstrom eines Verbrennungsmotors, zu driften. Im Falle des in DE 10 2012 110 210 B4 beschriebenen Temperatursensors kann die beobachtete Abweichung auf die Diffusion von Fremdatomen, wie zum Beispiel Chrom, Nickel, Eisen und Silizium, aus dem Abgasstrom in die Widerstandsstruktur zurückgeführt werden.

Die Aufgabe der Erfindung besteht deshalb darin, die Nachteile des Stands der Technik zu überwinden. Insbesondere soll ein Temperatursensor zur Verfügung gestellt werden mit einer geringen Sensordrift. Die Aufgabe der Erfindung wird gelöst durch einen Temperatursensor, insbesondere Hochtemperatursensor, aufweisend ein beschichtetes Substrat, wobei das Substrat ein Zirkoniumoxid oder eine Zirkoniumoxidkeramik beinhaltet, zumindest eine Widerstandsstruktur und zumindest zwei Anschlusskontakte, wobei die Anschlusskontakte die Widerstandsstruktur elektrisch kontaktieren, wobei das Substrat mit einer Isolationsschicht beschichtet ist, wobei die Isolationsschicht eine Metalloxidschicht beinhaltet, die Widerstandsstruktur und die freien Bereiche der Isolationsschicht, auf denen keine Widerstandsstruktur angeordnet ist, zumindest bereichsweise mit einer keramischen Zwischenschicht zur Passivierung beschichtet sind und auf der keramischen Zwischenschicht eine Schutzschicht angeordnet ist, wobei in der Isolationsschicht mindestens eine Öffnung ausgebildet ist, die zumindest abschnittsweise eine Oberfläche des Substrats freilegt, wobei die mindestens eine Öffnung derart ausgestaltet ist, dass mindestens ein zentrales Segment in der Isolationsschicht geschaffen wird, wobei die Kanten des zentralen Segments mit den Kanten des Substrats keinen gemeinsamen Abschluss aufweisen, wobei sich die Widerstandsstruktur und die darauf aufgebrachte keramische Zwischenschicht vollständig auf dem zentralen Segment befinden, wobei sowohl das zentrale Segment als auch die mindestens eine umrahmende Öffnung mit der Schutzschicht überdeckt sind, wobei die mindestens eine Öffnung mit dem Material der Schutzschicht gefüllt ist.

Erfindungsgemäß beinhaltet das Substrat ein Zirkoniumoxid oder eine Zirkoniumoxidkeramik. In Beispielen der Erfindung kann das Substrat auch aus einem Zirkoniumoxid oder einer Zirkoniumoxidkeramik bestehen oder im Wesentlichen bestehen. Auch kann in Beispielen der Erfindung die Isolationsschicht aus einer Metalloxidschicht bestehen oder im Wesentlichen bestehen. In einem Beispiel besteht das Substrat aus einem Zirkoniumoxid oder einer Zirkoniumoxidkeramik und die Isolationsschicht aus einer Metalloxidschicht.

Unter dem Begriff "Öffnung" kann eine Materialaussparung in der Isolationsschicht oder am Rand der Isolationsschicht verstanden werden. Die Materialaussparung kann beispielsweise rund, oval, rechteckig, grabenförmig oder schlitzförmig ausgestaltet sein. Unter dem Begriff "Schicht" kann eine ebene Schicht oder eine im Wesentlichen ebene Schicht verstanden, wobei mehrere Schichten übereinander angeordnet sein können.

Vorteilhaft wird durch das Ausbilden mindestens einer Öffnung in der Isolationsschicht, die zumindest abschnittsweise eine Oberfläche des Substrats freilegt, die Stabilität des Hochtemperatursensors gesteigert. In Beispielen der Erfindung sind in der Isolationsschicht eine Vielzahl von Öffnungen ausgebildet.

In den aus dem Stand der Technik bekannten Temperatursensoren kann die Isolationsschicht einen Kanal für das Eindringen von Fremdatomen bilden. Als Grund dafür kann die Porosität des Metalloxids in der Isolationsschicht gesehen werden. Die poröse Struktur fördert die Diffusion von Fremdatomen. Wenn die Fremdatome die Widerstandsstruktur, beispielsweise eine Platindünnschichtstruktur, erreichen legieren diese mit dem Platin und verändern den elektrischen Widerstand der Platindünnschichtstruktur. Dieser Effekt wird durch das Einbringen zumindest einer Öffnung minimiert, bzw. abgestellt.

Die Öffnung oder Öffnungen in der Isolationsschicht, die zumindest abschnittsweise eine Oberfläche des Substrats freilegt, bildet einen Bereich, der kein Metalloxidmaterial aufweist und teilt, abhängig von der Ausgestaltung der Öffnung oder Öffnungen, die Isolationsschicht in einzelne voneinander getrennte Segmente auf. Die Öffnungen können derart ausgestaltet sein, dass mindestens ein zentrales Segment in der Isolationsschicht geschaffen wird, das vorzugsweise in der Mitte des Substrats angeordnet ist. Vorzugsweise sind die Öffnungen zusammenhängend und umrahmen das zentrale Segment. Das zentrale Segment weist Kanten auf, wobei die Kanten des zentralen Segments mit den Kanten des Substrats keinen gemeinsamen Abschluss aufweisen. Die Widerstandsstruktur und die darauf aufgebrachte keramische Zwischenschicht zur Passivierung befinden sich vollständig auf dem zentralen Element. Sowohl das zentrale Segment mit der Widerstandsstruktur und der keramischen Zwischenschicht als auch die umrahmende Öffnung mit einer Schutzschicht aus beispielsweise einer Glaskeramik-Schutzschicht überdeckt sind. Bei der Erfindung ist/sind die Öffnung/Öffnungen mit dem Material der Schutzschicht gefüllt. Die mit dem Material der Schutzschicht gefüllte Öffnung bildet eine Diffusionsbarriere für Fremdatomen von den Kanten der Isolationsschicht in das zentrale Segment.

In einem Beispiel ist die Öffnung und/oder Öffnungen schlitzförmig ausgebildet, wobei die Schlitzbreite vorzugsweise zwischen 5 pm und 1 mm, bevorzugt zwischen 10 pm und 300 pm, besonders bevorzugt zwischen 20 pm und 100 pm beträgt.

Die Längserstreckung der schlitzförmigen Öffnung kann parallel und/oder senkrecht zur Längserstreckung des Substrats ausgebildet sein, und/oder die Längserstreckung einer Vielzahl von schlitzförmigen Öffnungen können parallel zueinander ausgebildet sein.

In einem Beispiel legt die Öffnung und/oder Öffnungen zumindest eine Seitenfläche des Substrats frei. Unter dem Begriff"Seitenfläche" kann in diesem Zusammenhang ein Bereich an der Seite oder am Rand einer ebenen Oberfläche des Substrats verstanden werden.

In einem Beispiel umgibt die Öffnung und/oder Öffnungen die Widerstandsstruktur vollständig. In noch einem Beispiel umrahmt die Öffnung und/oder eine weitere Öffnung der Öffnungen zumindest teilweise einen der beiden Anschlusskontakte der Widerstandsstruktur.

In einem weiteren Beispiel ist das Zirkoniumoxid oder das Zirkoniumoxid in der Zirkoniumoxidkeramik mit Oxiden eines dreiwertigen und eines fünfwertigen Metalls stabilisiert, und/oder zumindest an einem Anschlusskontakt ist zumindest eine Elektrode neben der Widerstandsstruktur auf der Isolationsschicht angeordnet, wobei die Elektrode oder die Elektroden einteilig mit der Widerstandsstruktur ausgebildet ist oder sind.

Die Stabilisierung des Zirkoniumoxids oder des Zirkoniumoxids in der Zirkoniumoxidkeramik kann als eine strukturelle Stabilisierung verstanden werden, bei der eine bestimmte Kristallstruktur stabilisiert wird. Als Oxide eines dreiwertigen Metalls wird besonders bevorzugt Yttriumoxid verwendet. Als Oxide eines fünfwertigen Metalls werden besonders bevorzugt Tantaloxid und/oder Nioboxid verwendet. Geeignete Mischungen sind beispielsweise aus der EP 0 115 148 B1 bekannt.

Durch die Stabilisierung der Kristallstruktur mit drei- und fünfwertigen Metalloxiden kann die thermische Expansion des Substrats an die thermische Expansion der Zwischenschicht und der Edelmetalle der Widerstandstruktur angepasst werden. Dadurch kann eine thermisch induzierte Spannung in der Widerstandsstruktur vermieden beziehungsweise verringert werden.

In einem Beispiel ist die Isolationsschicht eine Aluminiumoxidschicht.

In einem weiteren Beispiel weist die keramische Zwischenschicht eine Dicke zwischen 1 pm und 50 pm auf, bevorzugt eine Dicke zwischen 4 pm und 10 pm.

Diese Dicken sind so gewählt, um eine Deckschicht und gegebenenfalls auch einen Deckel auf der Zwischenschicht anzuordnen, ohne dass es, aufgrund der unterschiedlichen thermischen Ausdehnung zu einem Abplatzen der Zwischenschicht, der Deckschicht oder des Deckels kommt. In noch einem Beispiel beinhaltet die Schutzschicht ein Glas oder eine Glaskeramik und/oder der Deckel ist ein keramisches Plättchen.

Das Glas kann dabei insbesondere auch zur Befestigung des Deckels verwendet werden.

In einem Beispiel beinhaltet die Widerstandsstruktur ein Platinmaterial oder eine Platinlegierung, insbesondere einer Platinbasislegierung.

Platin oder Platinlegierungen sind zur Herstellung von Hochtemperatursensoren besonders gut geeignet.

Weiterhin schlägt die Erfindung eine Verwendung eines Temperatursensors in einem Abgassystem zur Steuerung und/oder Regelung eines Motors, insbesondere eines Kraftfahrzeugmotors vor.

Auch schlägt die Erfindung ein Verfahren zur Herstellung eines Temperatursensors vor, insbesondere eines Hochtemperatursensors, aufweisend:
Bereitstellen und Beschichten eines Substrats, wobei das Substrat ein Zirkoniumoxid oder eine Zirkoniumoxidkeramik beinhaltet, mit einer Isolationsschicht und Ausbilden mindestens einer Öffnung in der Isolationsschicht, die zumindest abschnittsweise eine Oberfläche des Substrats freilegt, wobei die Isolationsschicht eine Metalloxidschicht beinhaltet;
Anordnen einer Widerstandsstruktur und zumindest zwei Anschlusskontakte auf der Isolationsschicht, wobei die Anschlusskontakte die Widerstandsstruktur elektrisch kontaktieren; Beschichten der Widerstandsstruktur und die freien Bereiche der Isolationsschicht, auf denen keine Widerstandsstruktur angeordnet ist, zumindest bereichsweise mit einer keramischen Zwischenschicht; und
Anordnen einer Schutzschicht und/oder eines Deckels auf der keramischen Zwischenschicht.

In einem Beispiel umfasst das Ausbilden der mindestens einen Öffnung in der Isolationsschicht den Schritt:
Photolithographisches Ausbilden der Öffnung und/oder Ausbilden der Öffnung durch Laserablation.

Das Bereitstellen des Substrats kann das Bereitstellen eines Substrats aus Zirkoniumoxid, stabilisiert mit Yttriumoxid und Tantaloxid umfassen. Das Substrat kann eine Dicke von 380 pm haben und eine Fläche von 50 x 50 mm2 . Die Isolationsschicht kann eine Aluminiumoxidschicht sein und mit einem Physical Vapor Deposition, PVD, Verfahren auf dem Substrat aufgebracht werden. Die Schicht kann porös sein und eine Dicke von 2,4 pm haben.

Zur Herstellung der Widerstandsstruktur kann eine Platindünnschicht mit einem Temperaturkoeffizienten von 3850 ppm/K mittels eines PVD Verfahrens zunächst ganzflächig auf der Isolationsschicht aufgebracht werden. Die Widerstandsstruktur und die Anschlusskontakte können dann mittels eines photolithographischen Verfahrens hergestellt werden.

Danach kann beispielsweise die Zwischenschicht aus Aluminiumoxid mittels Siebdruckes oder mittels Aerosol Deposition Method, ADM, Sputtern oder PVD mit einer Dicke von 8 pm aufgebracht werden. Hierbei kann die Zwischenschicht die Platin Struktur und die an die Platin Struktur angrenzenden Bereiche der Isolationsschicht bedecken. Die Kontakte und die Randbereiche des Substrats können frei bleiben und werden von der Zwischenschicht nicht bedeckt. Die Öffnung in der Isolationsschicht kann dann um die gesamte Widerstandsstruktur und um die Anschlusskontakte als ein zusammenhängender Graben oder Schlitz in die Isolationsschicht mittels eines Lasers eingefräst werden. Beispielsweise kann die Breite der Öffnung ca. 100 pm betragen. Bei einer derartigen Laserablation der Isolationsschicht kann auch das Substrat an seiner Oberfläche geringfügig mitabgetragen werden, um hierdurch einen vollständigen Abtrag der Isolationsschicht zu gewährleisten. Weitere Öffnungen können zum Beispiel um die Anschlusskontakte eingebracht werden.

Nach dem Ausbilden der Öffnung oder Öffnungen kann eine Schutzschicht aus einer Glasfritte mit Siebdruck auf die gesamte Oberfläche aufgebracht und eingebrannt werden. Die Schutzschicht kann die Zwischenschicht und die Isolationsschicht überdecken und die Öffnung oder Öffnungen in der Isolationsschicht füllen. Die Anschlusskontakte können von dem Material der Schutzschicht frei bleiben.

Danach kann der Deckel, beispielsweise ein Hardcover aus Zirkoniumoxid, das mit Yttriumoxid und Tantaloxid stabilisiert sein kann mit einer Dicke von 250 pm auf der Schutzschicht angeordnet werden.

Abschließend können die entstandenen Temperatursensoren aus dem Nutzen vereinzelt werden und Anschlussdrähte mit den Anschlusskontakten verbunden werden. Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dabei zeigt:
- Figur 1: eine schematische Explosionsdarstellung eines aus dem Stand der Technik bekannten Temperatursensors;
- Figur 2a: eine schematische Draufsicht auf eine Isolationsschicht mit einer darauf angeordneten Widerstandsstruktur eines aus dem Stand der Technik bekannten Temperatursensors;
- Figuren 2b - 2d: schematische Draufsichten auf Isolationsschichten mit Öffnungen und darauf angeordneten Widerstandsstrukturen gemäß Ausführungsformen der Erfindung; und
- Figur 3a und 3b: schematische Schnittansichten durch ein Substrat mit einer darauf angeordneter Isolationsschicht mit Öffnungen, einer Widerstandsstruktur, einer Zwischenschicht und einer Schutzschicht gemäß einer Ausführungsform der Erfindung.

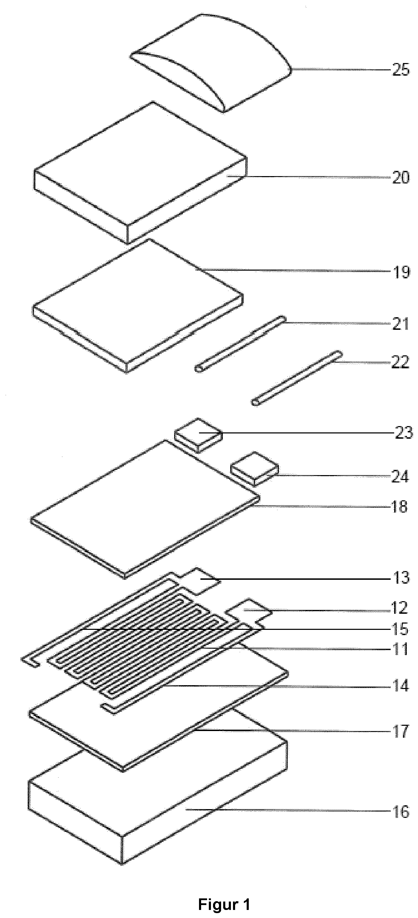

Die Figur 1 zeigt eine schematische Explosionsdarstellung eines aus dem Stand der Technik bekannten Temperatursensors. Eine mäanderförmige schichtförmige Widerstandsstruktur 11 ist mit zwei Anschlusskontakten 12, 13 elektrisch verbunden. Die Widerstandsstruktur 11 wird auf etwas mehr als zwei Seiten von zwei Elektroden 14, 15 umrahmt.

Ein Substrat 16 aus einem stabilisiertem Zirkoniumoxid oder einer Zirkonoxidkeramik, ist mit einer Isolationsschicht 17 aus Metalloxid beschichtet, durch die sichergestellt wird, dass die Widerstandsstruktur 11 durch das bei hohen Temperaturen leitfähige Zirkoniumoxid nicht kurzgeschlossen wird und dass eine schädliche Wechselwirkung zwischen dem Zirkoniumoxid und der Widerstandsstruktur 11 unterbunden wird.

Die Widerstandsstruktur 11 ist auf ihrer dem Substrat 16 abgewandten Seite mit einer Zwischenschicht 18, als Diffusionssperre versehen, welche ihrerseits mit einer Schutzschicht 19 zur Passivierung, die aus Glas oder einer Glaskeramik bestehen kann und mit einem Deckel 20 abgedeckt ist. Gemäß Figur 1 wird auf der Schutzschicht 19 ein Keramikplättchen als Deckel 20 aufgebracht. Das Keramikplättchen stellt eine zusätzliche Passivierung dar und wirkt als mechanischer "Schutzschild" gegen Abrasion durch Teilchen in dem Gehäuse, in dem der eigentliche Temperatursensor gefügt ist.

In dem in Figur 1 gezeigten Temperatursensor sind die Anschlusskontakte 12, 13 des Temperatursensors mit Anschlussdrähten 21 und 22 über Anschlusspads 23 und 24 mit einer Fixierung 25, bestehend aus einem elektrisch isolierenden Fixiertropfen, zugentlastet. Diese Fixierung 25 besteht aus hochreinem Glas oder Glaskeramik.

Ergänzend zur eingangs erwähnten Ausführungsform der Zwischensicht 18 als Diffusionsbarriere sei angemerkt, dass diese entweder im Dünnschichtverfahren mit einer Dicke im Bereich von 0,2 bis 10 pm, vorzugsweise 5 pm, oder im Dickschichtverfahren mit einer Dicke im Bereich von 5 bis 50 pm, vorzugsweise 15 pm aufgebracht wird.

Die Dicke der Anschlusspads 23, 24 an der Widerstandsstruktur 11 liegt im Bereich von 10 bis 50 pm, vorzugsweise bei 20 pm. Das Substrat 16 als Träger weist eine Dicke im Bereich von 0,1 mm bis 1 mm, vorzugsweise bei 0,4 mm, besonders bevorzugt 0,38 mm auf.

Die Anschlusskontakte 12, 13 sind jeweils auf einer Seite angeordnet. Es ist darüber hinaus jedoch auch möglich, beide Anschlusskontakte 12, 13 jeweils auf sich gegenüber liegenden Seiten anzuordnen.

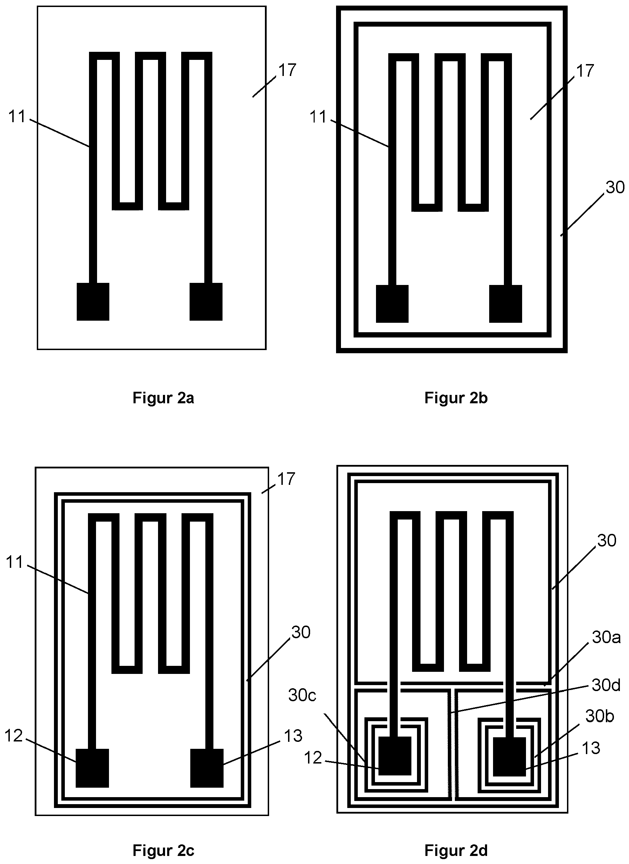

Figur 2a zeigt eine schematische Draufsicht auf eine Isolationsschicht 17 mit einer darauf angeordneten Widerstandsstruktur 11 eines aus dem Stand der Technik bekannten Temperatursensors. Die in Figur 2a gezeigte Isolationsschicht 17 und Widerstandsstruktur 11 können beispielsweise in dem in Figur 1 gezeigten Temperatursensor verwendet werden. Die gezeigte Isolationsschicht 17 weist keine Öffnungen auf.

Die Figuren 2b bis 2d zeigen schematische Draufsichten auf Isolationsschichten 17 mit Öffnungen 30, 30a-d und darauf angeordneten Widerstandsstrukturen 11 gemäß verschiedener Ausführungsformen der Erfindung. Bei der in Figur 2b gezeigten Ausführungsform ist in der Isolationsschicht 17 eine Öffnung 30 ausgebildet, die eine Oberfläche des Substrats freilegt. Die Öffnung 30 kann derart ausgestaltet sein, dass ein zentrales Segment in der Isolationsschicht 17 geschaffen wird, das in der Mitte des Substrats angeordnet ist. Das zentrale Segment weist Kanten auf, wobei die Kanten des zentralen Segments mit den Kanten des Substrats keinen gemeinsamen Abschluss aufweisen. In der gezeigten Ausführungsform ist die Öffnung 30 als umlaufende Öffnung in dem Material der Isolationsschicht 17 dargestellt, die eine Oberfläche des Substrats freilegt. Die Kanten des Substrats und die an die Kanten angrenzenden Bereiche der Substratoberfläche sind von der Isolationsschicht nicht bedeckt. Hierbei kann die Isolationsschicht 17 zunächst vollständig auf der Oberfläche des Substrats aufgebracht werden und anschließend in einem umlaufenden Randbereich wieder entfernt werden.

In der in Figur 2c gezeigten Ausführungsform ist die Öffnung 30 in der Isolationsschicht 17 schlitzförmig ausgestaltet und umgibt die Widerstandsstruktur 11 und die Anschlusskontakte 12, 13 vollständig. Die Schlitzbreite kann beispielsweise in einem Bereich von 10 pm bis 1 mm liegen.

In Figur 2d ist eine Ausführungsform gezeigt, bei der mehrere schlitzförmige Öffnungen 30, 30a-d in dem Material der Isolationsschicht 17 eingebracht sind und mehrere Segmente in der Isolationsschicht 17 ausbilden. In der gezeigten Ausführungsform umgeben einzelne schlitzförmige Öffnungen 30, 30a-d die Anschlusskontakte 12, 13 und die Widerstandsstruktur 1 1.

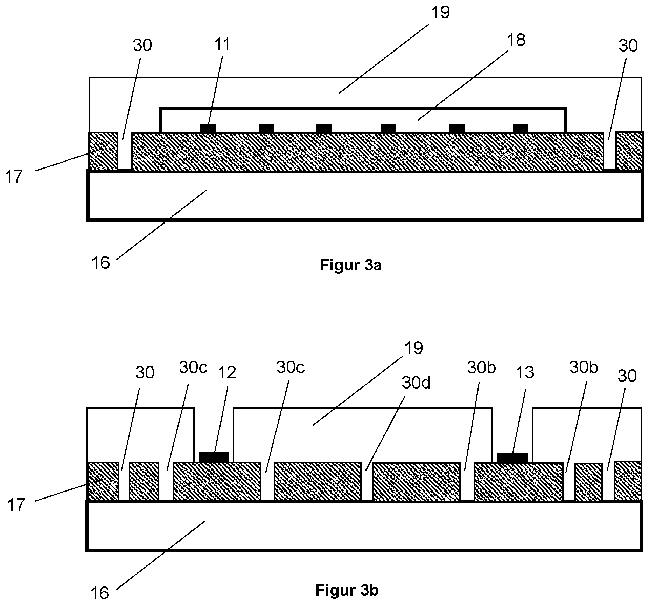

Die Figuren 3a und 3b zeigen schematische Schnittansichten durch ein Substrat 16 mit einer darauf angeordneter Isolationsschicht 17 mit Öffnungen 30, einer Widerstandsstruktur 11 , einer Zwischenschicht 18 und einer Schutzschicht 19 gemäß einer Ausführungsform der Erfindung. In der gezeigten Ausführungsform füllt das Material der Schutzschicht 19 die Öffnungen 17 vollständig. Die mit dem Material der Schutzschicht 19 gefüllten Öffnungen 17 bilden eine Diffusionsbarriere für Fremdatomen von den Kanten der Isolationsschicht 17 in das zentrale Segment. Im Bereich der Anschlusskontakte 12, 13 befindet sich keine Schutzschicht 19, wie es in Figur 3b gezeigt ist. In Figur 3b werden auch die Öffnungen 30b und 30c gezeigt, die die Anschlusskontakte 12, 13 teilweise einschließen und die Öffnung 30d, die zwischen den Anschlusskontakten 12, 13 angeordnet ist.

### Bezugszeichenliste

11 Widerstandsstruktur
12, 13 Anschlusskontakt
14, 15 Elektrode
16 Substrat
17 Isolationsschicht
18 Zwischenschicht

## Patentansprüche

1. Temperatursensor, insbesondere Hochtemperatursensor, aufweisend ein beschichtetes Substrat (16), wobei das Substrat (16) ein Zirkoniumoxid oder eine Zirkoniumoxidkeramik beinhaltet, zumindest eine Widerstandsstruktur (11) und zumindest zwei Anschlusskontakte (12, 13), wobei die Anschlusskontakte (12, 13) die Widerstandsstruktur (11) elektrisch kontaktieren, wobei das Substrat (16) mit einer Isolationsschicht (17) beschichtet ist, wobei die Isolationsschicht (17) eine Metalloxidschicht beinhaltet, die Widerstandsstruktur (11) und die freien Bereiche der Isolationsschicht (17), auf denen keine Widerstandsstruktur (11) angeordnet ist, zumindest bereichsweise mit einer keramischen Zwischenschicht (18) zur Passivierung beschichtet sind und auf der keramischen Zwischenschicht (18) eine Schutzschicht (19) angeordnet ist, **dadurch gekennzeichnet, dass**
in der Isolationsschicht (17) mindestens eine Öffnung (30, 30a-d) ausgebildet ist, die zumindest abschnittsweise eine Oberfläche des Substrats (16) freilegt, wobei die mindestens eine Öffnung (30, 30a-d) derart ausgestaltet ist, dass mindestens ein zentrales Segment in der Isolationsschicht (17) geschaffen wird, wobei die Kanten des zentralen Segments mit den Kanten des Substrats (16) keinen gemeinsamen Abschluss aufweisen, wobei sich die Widerstandsstruktur (11) und die darauf aufgebrachte keramische Zwischenschicht (18) vollständig auf dem zentralen Segment befinden, wobei sowohl das zentrale Segment als auch die mindestens eine umrahmende Öffnung (30, 30a-d) mit der Schutzschicht überdeckt sind, wobei die mindestens eine Öffnung (30, 30a-d) mit dem Material der Schutzschicht (19) gefüllt ist.

2. Temperatursensor nach Anspruch 1,
**dadurch gekennzeichnet, dass**
ein Deckel (20) auf der Schutzschicht (19) angeordnet ist.

3. Temperatursensor nach einem der vorangehenden Ansprüche,
**dadurch gekennzeichnet, dass**
die Öffnung (30, 30a-d) und/oder Öffnungen (30, 30a-d) schlitzförmig ausgebildet ist/sind, wobei die Schlitzbreite vorzugsweise zwischen 5 µm und 1 mm, bevorzugt zwischen 10 µm und 300 µm, besonders bevorzugt zwischen 20 µm und 100 µm beträgt.

4. Temperatursensor nach Anspruch 3,
**dadurch gekennzeichnet, dass**
die Längserstreckung der schlitzförmigen Öffnung (30, 30a-d) parallel und/oder senkrecht zur Längserstreckung des Substrats (16) ausgebildet ist, und/oder wobei die Längserstreckung einer Vielzahl von schlitzförmigen Öffnungen (30, 30a-d) parallel zueinander ausgebildet sind.

5. Temperatursensor nach einem der vorangehenden Ansprüche,
**dadurch gekennzeichnet, dass**
die Öffnung (30, 30a-d) und/oder Öffnungen (30, 30a-d) zumindest eine Seitenfläche des Substrats (16) freilegt/freilegen.

6. Temperatursensor nach einem der vorangehenden Ansprüche,
**dadurch gekennzeichnet, dass**
die Öffnung (30) und/oder Öffnungen (30) die Widerstandsstruktur (11) vollständig umgeben.

7. Temperatursensor nach einem der vorangehenden Ansprüche,
**dadurch gekennzeichnet, dass**
die Öffnung (30a-d) und/oder eine weitere Öffnung der Öffnungen (30a-d) zumindest einen der beiden Anschlusskontakte (12, 13) der Widerstandsstruktur (11) teilweise umrahmt.

8. Temperatursensor nach einem der vorangehenden Ansprüche,
**dadurch gekennzeichnet, dass**
das Zirkoniumoxid oder das Zirkoniumoxid in der Zirkoniumoxidkeramik mit Oxiden eines dreiwertigen und eines fünfwertigen Metalls stabilisiert ist, und/oder zumindest an einem Anschlusskontakt (12, 13) zumindest eine Elektrode (14, 15) neben der Widerstandsstruktur (11) auf der Isolationsschicht (17) angeordnet ist, wobei die Elektrode (14, 15) oder die Elektroden (14, 15) einteilig mit der Widerstandsstruktur (11) ausgebildet ist oder sind.

9. Temperatursensor nach einem der vorangehenden Ansprüche,
**dadurch gekennzeichnet, dass**
die Isolationsschicht (17) eine Aluminiumoxidschicht ist.

10. Temperatursensor nach einem der vorangehenden Ansprüche,
**dadurch gekennzeichnet, dass**
die keramische Zwischenschicht (18) eine Dicke zwischen 1 µm und 50 µm aufweist, bevorzugt eine Dicke zwischen 4 µm und 10 µm aufweist.

11. Temperatursensor nach einem der vorangehenden Ansprüche,
**dadurch gekennzeichnet, dass**
die Schutzschicht (19) ein Glas oder eine Glaskeramik beinhaltet und/oder der Deckel (20) ein keramisches Plättchen ist.

12. Temperatursensor nach einem der vorangehenden Ansprüche,
**dadurch gekennzeichnet, dass**
die Widerstandsstruktur (11) ein Platinmaterial oder eine Platinlegierung, insbesondere einer Platinbasislegierung beinhaltet.

## Claims

1. A temperature sensor, in particular a high-temperature sensor, having a coated substrate (16), wherein the substrate (16) contains a zirconium oxide or a zirconium oxide ceramic, at least one resistance structure (11) and at least two connection contacts (12, 13), wherein the connection contacts (12, 13) electrically contact the resistance structure (11), wherein the substrate (16) is coated with an insulation layer (17), wherein the insulation layer (17) contains a metal oxide layer, the resistance structure (11) and the free areas of the insulation layer (17) on which no resistance structure (11) is arranged are at least regionally coated with a ceramic intermediate layer (18) for passivation purposes, and a protective layer (19) is arranged on the ceramic intermediate layer (18),
**characterized in that**
at least one opening (30, 30a-d) is formed in the insulation layer (17) and at least sectionally exposes a surface of the substrate (16), wherein the at least one opening (30, 30a-d) is designed in such a way as to provide for at least one central segment in the insulation layer (17), wherein the edges of the central segment have no common termination with the edges of the substrate (16), wherein the resistance structure (11) and the ceramic intermediate layer (18) applied thereto are located completely on the central segment, wherein both the central segment and the at least one framing opening (30, 30a-d) are covered by the protective layer, wherein the at least one opening (30, 30a-d)is filled with the material of the protective layer (19).

2. The temperature sensor according to claim 1,
**characterized in that**
a lid (20) is arranged on the protective layer (19).

3. The temperature sensor according to any one of the preceding claims,
**characterized in that**
the opening (30, 30a-d) and/or openings (30, 30a-d) is/are slotted in design, wherein the slot width preferably measures between 5 µm and 1 mm, preferably between 10 µm and 300 µm, especially preferably between 20 µm and 100 µm.

4. The temperature sensor according to claim 3,
**characterized in that**
the longitudinal extension of the slotted opening (30, 30a-d) is designed parallel and/or perpendicular to the longitudinal extension of the substrate (16), and/or wherein the longitudinal extension of a plurality of slotted openings (30, 30a-d) are parallel to each other in design.

5. The temperature sensor according to any one of the preceding claims,
**characterized in that**
the opening (30, 30a-d) and/or openings (30, 30a-d) expose(s) at least one lateral surface of the substrate (16).

6. The temperature sensor according to any one of the preceding claims,
**characterized in that**
the opening (30) and/or openings (30) completely envelop the resistance structure (11).

7. The temperature sensor according to any one of the preceding claims,
**characterized in that**
the opening (30a-d) and/or an additional opening of the openings (30a-d) partially frames at least one of the two connection contacts (12, 13) of the resistance structure (11).

8. The temperature sensor according to any one of the preceding claims,
**characterized in that**
the zirconium oxide or the zirconium oxide in the zirconium oxide ceramic is stabilized with oxides of a trivalent and a pentavalent metal, and/or at least one electrode (14, 15) next to the resistance structure (11) is arranged on the insulation layer (17) at least on one connection contact (12, 13), wherein the electrode (14, 15) or the electrodes (14, 15) is/are designed as one piece with the resistance structure (11).

9. The temperature sensor according to any one of the preceding claims,
**characterized in that**
the insulation layer (17) is an aluminum oxide layer.

10. The temperature sensor according to any one of the preceding claims,
**characterized in that**
the ceramic intermediate layer (18) has a thickness of between 1 µm and 50 µm, preferably a thickness of between 4 µm and 10 µm.

11. The temperature sensor according to any one of the preceding claims,
**characterized in that**
the protective layer (19) contains a glass or glass ceramic and/or the lid (20) is a ceramic tile.

12. The temperature sensor according to any one of the preceding claims,
**characterized in that**
the resistance structure (11) contains a platinum material or a platinum alloy, in particular a platinum-based alloy.

## Revendications

1. Capteur de température, notamment capteur de hautes températures, comportant un substrat (16) revêtu, le substrat (16) contenant un oxyde de zirconium ou une céramique d'oxyde de zirconium, au moins une structure de résistance (11) et au moins deux contacts de connexion (12, 13), les contacts de connexion (12, 13) contactant électriquement la structure de résistance (11), le substrat (16) étant revêtu d'une couche isolante (17), la couche isolante (17) contenant une couche d'oxyde métallique, la structure de résistance (11) et les zones libres de la couche isolante (17) sur lesquelles n'est placée aucune structure de résistance (11) étant revêtues au moins par endroits d'une couche intermédiaire (18) en céramique pour la passivation et sur la couche intermédiaire (18) en céramique étant placée une couche protectrice (19),
**caractérisé en ce que**
dans la couche isolante (17) est réalisée au moins une ouverture (30, 30a à d), qui met à nu au moins par endroits une surface du substrat (16), l'au moins une ouverture (30, 30a à d) étant conçue de telle sorte, qu'au moins un segment central soit créé dans la couche isolante (17), les arêtes du segment central ne présentant aucune terminaison commune avec les arêtes du substrat (16), la structure de résistance (11) et la couche intermédiaire (18) en céramique appliquée sur celle-ci se trouvant entièrement sur le segment central, aussi bien le segment central qu'également l'au moins une ouverture (30, 30a à d) encadrante étant recouverts de la couche protectrice, l'au moins une ouverture (30, 30a à d) étant remplie de la matière de la couche protectrice (19).

2. Capteur de température selon la revendication 1,
**caractérisé**
**en ce qu'**un couvercle (20) est placé sur la couche protectrice (19).

3. Capteur de température selon l'une quelconque des revendications précédentes,
**caractérisé en ce que**
l'ouverture (30, 30a à d) et / ou les ouvertures (30, 30a à d) est / sont réalisé(e)s en forme de fente(s), la largeur de la fente étant comprise de préférence entre 5 µm et 1 mm, de manière préférentielle, entre 10 µm et 300 µm, de manière particulièrement préférentielle, entrer 20 µm et 100 µm.

4. Capteur de température selon la revendication 3,
**caractérisé en ce que**
l'extension longitudinale de l'ouverture (30, 30a à d) en forme de fente est réalisée à la parallèle et / ou à la perpendiculaire de l'extension longitudinale du substrat (16) et / ou l'extension longitudinale d'une pluralité d'ouvertures (30, 30a à d) en forme de fentes étant réalisée à la parallèle l'une de l'autre.

5. Capteur de température selon l'une quelconque des revendications précédentes,
**caractérisé en ce que**
l'ouverture (30, 30a à d) et / ou des ouvertures (30, 30a à d) met / mettent à nu au moins une surface latérale du substrat (16).

6. Capteur de température selon l'une quelconque des revendications précédentes,
**caractérisé en ce que**
l'ouverture (30) et / ou des ouvertures (30) entourent complètement la structure de résistance (11).

7. Capteur de température selon l'une quelconque des revendications précédentes,
**caractérisé en ce que**
l'ouverture (30a à d) et / ou une ouverture supplémentaire parmi les ouvertures (30a à d) encadre partiellement au moins l'un des deux contacts de connexion (12, 13) de la structure de résistance (11).

8. Capteur de température selon l'une quelconque des revendications précédentes,
**caractérisé en ce que**
l'oxyde de zirconium ou l'oxyde de zirconium dans la céramique d'oxyde de zirconium est stabilisé par des oxydes d'un métal trivalent ou pentavalent, et / ou sur au moins un contact de connexion (12, 13), **en ce qu'**au moins une électrode (14, 15) est placée à côté de la structure de résistance (11) sur la couche isolante (17), l'électrode (14, 15) ou les électrodes (14, 15) étant réalisée ou réalisées en monobloc avec la structure de résistance (11).

9. Capteur de température selon l'une quelconque des revendications précédentes,
**caractérisé en ce que**
la couche isolante (17) est une couche en oxyde d'aluminium.

10. Capteur de température selon l'une quelconque des revendications précédentes,
**caractérisé en ce que**
la couche intermédiaire (18) en céramique présente une épaisseur comprise entre 1 µm et 50 µm, de manière préférentielle une épaisseur comprise entre 4 µm et 10 µm.

11. Capteur de température selon l'une quelconque des revendications précédentes,
**caractérisé en ce que**
la couche protectrice (19) contient un verre ou une vitrocéramique et / ou le couvercle (20) est une plaquette en céramique.

12. Capteur de température selon l'une quelconque des revendications précédentes,
**caractérisé en ce que**
la structure de résistance (11) contient une matière à base de platine ou un alliage de platine, notamment un alliage à base de platine.
